# EUROPÄISCHE PATENTANMELDUNG

(11) **EP 3 786 499 A1**
(43) Veröffentlichungstag der Anmeldung: **03.03.2021**
(21) Anmeldenummer: 19194616.9
(22) Anmeldetag: 30.08.2019
(51) Int. Cl.: F16K 25/00, F16K 11/078, F16K 3/02, F16K 31/528, F16K 31/56

(54) **SANITÄRVENTIL MIT KERAMISCHEN DICHTELEMENTEN**

(71) Anmelder: Ideal Standard International NV, 1930 Zaventem (BE)
(72) Erfinder: Müller, Alexander, DE-54518 Hupperath (DE)
(74) Vertreter: Feucker, Max Martin

(57) **Zusammenfassung**

Die vorliegende Erfindung betrifft eine Sanitärventil mit
- mindestens einem Wassereinlass,
- einem Wasserauslass und
- einer Ventileinheit, welche zwischen dem mindestens einen Wassereinlass und dem Wasserauslass angeordnet ist und aus mindestens einer ersten Stellung in mindestens eine zweite Stellung überführbar ist,
dadurch gekennzeichnet, dass
die Ventileinheit mindestens ein erstes Dichtelement (1) und ein zweites Dichtelement (2) aufweist, wobei
- das erste Dichtelement (1) und das zweite Dichtelement (2) aus Keramik gebildet sind,
- das erste Dichtelement (1) mindestens eine erste Durchfluss-öffnung (4) aufweist,
- das zweite Dichtelement (2) mindestens eine zweite Durchflussöffnung (5) aufweist und
- das erste Dichtelement (1) und das zweite Dichtelement (2) zwischen der ersten Stellung und der zweiten Stellung relativ zueinander bewegbar sind.

## Beschreibung

Die vorliegende Erfindung betrifft ein Sanitärventil mit einem Wassereinlass, einem Wasserauslass und einer Ventileinheit, welche zwischen dem Wassereinlass und dem Wasserauslass angeordnet ist und aus mindestens einer ersten Stellung in mindestens eine zweite Stellung überführbar ist, wobei die Ventileinheit den Wasserfluss von dem Wassereinlass zu dem Wasserauslass in einer Durchflussstellung (erste Stellung) erlaubt und in einer Sperrstellung (zweite Stellung) verhindert.

Ein solches Sanitärventil ist beispielsweise aus DE 10 2012 221 043 A1 bekannt, gemäß der die Ventileinheit ein Membranventil umfasst. Das Membranventil kann zwischen einer Durchflussstellung und einer Sperrstellung umgeschaltet werden, wobei es zudem möglich ist, in der Durchflussstellung den Durchfluss durch die Ventileinheit zu verändern. Das Membranventil kann durch eine Druckbetätigung einer Betätigungseinrichtung zwischen der Sperrstellung und der Durchflussstellung umgeschaltet werden. Bei diesem Sanitärventil kommt das Wasser allerdings mit der aus einem Kunststoff/Gummi bestehenden Membran in Kontakt, was in einigen Anwendungsfällen unerwünscht ist.

Aufgabe der vorliegenden Erfindung ist es daher, die mit Bezug zum Stand der Technik erläuterten Nachteile zu beseitigen und insbesondere ein Sanitärventil anzugeben, das einfach zu bedienen ist und bei dem der Kontakt des Wassers mit Bauteilen aus Gummi/Kunststoff vermindert ist.

Gelöst wird die Aufgabe durch ein Sanitärventil mit den Merkmalen des unabhängigen Anspruchs. Vorteilhafte Weiterbildungen des Sanitärventils sind in den abhängigen Ansprüchen und in der Beschreibung angegeben, wobei einzelne Merkmale der vorteilhaften Weiterbildungen in technisch sinnvoller Weise miteinander kombinierbar sind.

Gelöst wird die Aufgabe insbesondere durch ein Sanitärventil mit den eingangs genannten Merkmalen, bei dem die Ventileinheit mindestens ein erstes Dichtelement und ein zweites Dichtelement aufweist, wobei das erste Dichtelement und das zweite Dichtelement aus Keramik gebildet sind, das erste Dichtelement mindestens eine erste Durchflussöffnung aufweist, das zweite Dichtelement mindestens eine zweie Durchflussöffnung aufweist, das erste Dichtelement und das zweite Dichtelement zwischen der ersten Stellung und der zweiten Stellung relativ zueinander bewegbar sind, wobei die erste Stellung eine Durchflussstellung ist, in der mindestens eine erste Durchflussöffnung und mindestens eine zweite Durchflussöffnung einander zumindest teilweise überlappen und so einen Durchfluss von mindestens einem Wassereinlass zu dem Wasserauslass ermöglichen.

Insbesondere ist eine zweite Stellung eine Sperrstellung, in der die mindestens eine erste Durchflussöffnung und die mindestens eine zweite Durchflussöffnung einander nicht überlappen.

Alternativ oder kumulativ kann das Sanitärventil einen Heißwassereinlass und einen Kaltwassereinlass als Wassereinlässe aufweisen, wobei das erste Dichtelement wenigstens eine dem Kaltwassereinlass zugeordnete erste Durchflussöffnung und wenigstens eine weitere, dem Heißwasseranschluss zugeordnete erste Durchflussöffnung aufweist, wobei durch Relativbewegung des zweiten Dichtelements zu dem ersten Dichtelement die Ventileinheit von einer ersten Durchflussstellung als eine erste Stellung in eine zweite Durchflussstellung als eine zweite Stellung bringbar ist, wobei sich die Wassertemperatur des am Wasserauslass ausfließenden Wassers in der ersten Durchflussstellung und von der Wassertemperatur des am Wasserauslass ausfließenden Wassers in der zweiten Durchflussstellung unterscheidet.

Wenn hingegen nur genau ein Wassereinlass (Kaltwasser, Heißwasser oder Mischwasser) vorgesehen ist, kann die Ventileinheit durch Relativbewegung des zweiten Dichtelements zu dem ersten Dichtelement von einer ersten Durchflussstellung als eine erste Stellung in eine zweite Durchflussstellung als eine zweite Stellung bringbar sein, wobei sich der Durchfluss durch die Ventileinheit in der ersten Durchflussstellung und von dem Durchfluss in der zweiten Durchflussstellung unterscheidet.

Die Erfindung sieht in ihrem Grundgedanken also vor, dass sowohl das Verschlussteil als auch der Ventilsitz der Ventileinheit aus einem Keramikbauteil (Dichtelemente) bestehen, wobei in der Durchflussstellung (bzw. in den Durchflussstellungen) der Durchfluss des Wassers dadurch erreicht wird, dass sich die in den Dichtelementen ausgebildeten Durchflussöffnungen überlappen (also zumindest teilweise überschneiden), während in der Sperrstellung die Dichtelemente die Durchflussöffnungen gegenseitig verschließen. Da somit keine aus Gummi bestehenden Bauteile erforderlich sind, die in der Durchflussstellung von dem Wasser umströmt oder beströmt werden, ist ein Kontakt von Wasser mit Gummi vermieden oder zumindest reduziert.

Die Dichtelemente (zumindest erstes Dichtelement und zweites Dichtelement) können beispielsweise hülsenförmig im Sinne eines Rohrabschnitts mit einer beliebigen Querschnittsform ausgebildet sein. Bevorzugt ist die Querschnittsform jedoch kreisringförmig. Bei einer hülsenförmigen Ausbildung der Dichtelemente ist die jeweils vorgesehene mindestens eine Durchflussöffnung in der Mantelfläche des hülsenförmigen Dichtelements ausgebildet. In diesem Fall sind die Dichtelemente koaxial zueinander angeordnet.

Alternativ kann vorgesehen sein, dass die Dichtelemente scheibenförmig im Sinne einer Platte ausgebildet sind. Die scheibenförmigen Dichtelemente können dabei insbesondere rund (beispielswiese oval oder kreisförmig) oder eckig (dreieckig, quadratisch, rechteckig oder mehreckig) ausgebildet sein.

Die Dichtelemente sind insbesondere in einem Gehäuse angeordnet, welches den mindestens einen Wassereinlass und den Wasserauslass aufweist.

Das erste Dichtelement und das zweite Dichtelement liegen mit ihren einander zugewandten Oberflächen unmittelbar aneinander an. Es ist also kein weiteres Bauteil zwischen den Dichtelementen angeordnet, welches die Dichtelemente voneinander beabstanden würde. Um sicherzustellen, dass die einander zugewandten Oberflächen der Dichtelemente zur Abdichtung mit einer orthogonal zu den Oberflächen ausgerichteten Kraft aufeinandergedrückt werden, kann vorgesehen sein, dass ein Druckerzeugungsmittel ausgebildet ist, welches die Oberflächen aufeinanderdrückt.

Insbesondere im Falle der hülsenförmigen Ausbildung der Dichtelemente kann dies beispielsweise dadurch erreicht werden, dass das außen angeordnete Dichtelement einen sich axial erstreckenden Schlitz aufweist, wobei insbesondere der Innendurchmesser dieses außen angeordneten Dichtelements vor der Montage etwas geringer ist als der Außendurchmesser des inneren Dichtelements, so dass sich das äußere Dichtelement im montierten Zustand selbsttätig auf die äußere Oberfläche des inneren Dichtelements drückt.

Insbesondere bei einer scheibenförmigen Ausbildung der Dichtelemente kann das Druckerzeugungsmittel durch ein elastisches, beispielsweise aus Gummi bestehendes Bauteil (beispielsweise O-Ring) gebildet sein, welches zwischen einem weiteren Bauteil wie Gehäuse des Sanitärventils und zumindest einem der Dichtelemente angeordnet ist. Insbesondere können zwei solcher Druckerzeugungsmittel vorgesehen sein, die dem ersten Dichtelement und dem zweiten Dichtelement auf der jeweiligen Oberfläche zugeordnet sind, die dem anderen Dichtelement abgewandt ist.

Für einen einfachen Aufbau kann insbesondere im Falle von scheibenförmigen Dichtelementen jedes Dichtelement zur Einstellung des Durchflusses genau eine Durchflussöffnung aufweisen, wobei auch bevorzugt im Falle von hülsenförmigen Dichtelementen jedes Dichtelement mehrere Durchflussöffnungen aufweisen kann. Das erste Dichtelement und das zweite Dichtelement weisen zur Einstellung des Durchflusses bevorzugt immer die gleiche Anzahl an Durchflussöffnungen auf. Soll mit der Ventileinheit hingegen eine Mischwassertemperatur eingestellt werden, kann das zweite Dichtelement auch nur genau eine zweite Durchflussöffnung aufweisen, während das erste Dichtelement genau zwei erste Durchflussöffnungen (jeweils eine für Kaltwasser und Heißwasser) aufweist.

In einer Ausführungsform ist ein drittes Dichtelement vorgesehen, wobei das zweite Dichtelement zwischen dem ersten Dichtelement und dem dritten Dichtelement angeordnet ist und relativ zu dem ersten Dichtelement und dem dritten Dichtelement beweglich ist. Dies ist insbesondere bei einer scheibenförmigen Ausbildung der Dichtelemente vorteilhaft. Bei einer solchen Ausbildung weisen das erste Dichtelement und das dritte Dichtelement Durchflussöffnungen auf, die in jedem Zustand überlappen, wobei die Durchflussöffnung(en) des zweiten Dichtelements zu den Durchflussöffnungen des ersten und dritten Dichtelements in und außer Überlappung gebracht werden können.

Bei der Überführung der Ventileinheit aus der Durchflussstellung in die Sperrstellung und zurück werden die Dichtelemente entlang ihrer aneinander zugewandten Oberflächen relativ zueinander bewegt. Hierbei ist in der Regel das erste Dichtelement stationär beispielsweise in einem Gehäuse angeordnet, während das zweite Dichtelement in dem Gehäuse relativ zu dem ersten Dichtelement bewegt werden kann. Bevorzugt ist die Relativbewegung zwischen der Durchflussstellung und der Sperrstellung zwischen dem ersten Dichtelement und dem zweiten Dichtelement mittels einer Hubbewegung in der Ebene oder parallel zu der Ebene der Durchflussöffnungen vorgesehen, wobei eine Hubbewegung insbesondere in Richtung der axialen Achse des Sanitärventils erfolgt. Diese Relativbewegung ist von einer solchen Größenordnung, dass die Durchflussöffnungen der Dichtelemente bei Überführung in die Sperrstellung nicht mehr überlappen. Die Hubbewegung ist also bevorzugt größer als die Höhe der Durchflussöffnungen.

Es kann nun (insbesondere zusätzlich) vorgesehen sein, dass durch eine in der Regel in ihrer Größe kleineren Relativbewegung der Dichtelemente der Durchfluss durch die Ventileinheit oder Wassertemperatur am Wasserauslass (Mischwassertemperatur) eingestellt werden kann. Hierbei kann insbesondere vorgesehen sein, dass das erste Dichtelement und das zweite Dichtelement stufenlos relativ zueinander bewegbar sind. Während insbesondere bei scheibenförmigen Dichtelementen die Relativbewegung zur Einstellung des Durchflusses in die gleiche Richtung wie zum Überführen der Ventileinheit von der Durchflussstellung in die Sperrstellung erfolgen kann, kann insbesondere bei einer hülsenförmigen Ausbildung der Dichtelemente vorgesehen sein, dass die Relativbewegung zur Einstellung des Durchflusses oder zur Einstellung der Mischwassertemperatur quer zu der Hubbewegung für die Überführung zwischen der Durchflussstellung und der Sperrstellung erfolgt. Insbesondere kann das zweite Dichtelement hierbei relativ zu dem ersten Dichtelement verdreht werden, wodurch der Grad der Überlappung der Durchflussöffnungen verändert wird, während die Hubbewegung eine lineare axiale Bewegung darstellt.

Zum Überführen der Ventileinheit von der Durchflussstellung in die Sperrstellung und zurück und gegebenenfalls zum Einstellen des Durchflusses oder zum Einstellen der Mischwassertemperatur kann das Sanitärventil eine Betätigungseinrichtung umfassen, die durch eine Druckbetätigung, insbesondere in axialer Richtung des Sanitärventils die Ventileinheit zwischen der Sperrstellung und der Durchflussstellung umschaltet und mit der gegebenenfalls durch eine Drehbetätigung der Durchfluss durch die Ventileinheit oder die Mischwassertemperatur veränderbar ist. Es kann dabei vorgesehen sein, dass der Benutzer genau ein Bauteil sowohl Druckbetätigen als auch Drehbetätigen kann. Alternativ kann vorgesehen sein, dass der Benutzer ein erstes Bauteil Druckbetätigen und ein zweites Bauteil zur Änderung des Durchflusses Drehbetätigen kann.

Für die Überführung der Ventileinheit aus der Durchflussstellung in die Sperrstellung und zurück weist die Betätigungseinrichtung eine Mechanik nach dem Kugelschreiberprinzip auf. Hierbei ist insbesondere vorgesehen, dass ein Verbindungselement der Betätigungseinrichtung mit dem zweiten Dichtelement axial unbeweglich verbunden ist und dass die Betätigungseinrichtung eine Kulissengestalt aufweist, die das Verbindungselement nach einer Druckbetätigung zumindest indirekt in einer ersten stabilen axialen Position hält und die dafür vorgesehen ist, dass das Verbindungselement während der Druckbetätigung in eine zweite stabile axiale Position überführbar ist, die sich von der ersten stabilen axialen Position unterscheidet. Somit kann durch die Druckbetätigung der Betätigungseinrichtung das zweite Dichtelement eine Hubbewegung in axialer Richtung zwischen der Durchflussstellung und der Sperrstellung ausführen.

Die Betätigungseinrichtung kann zudem eine Kopplungseinrichtung umfassen, die mit dem beweglichen (ersten oder zweiten) Dichtelement gekoppelt ist, so dass durch eine Drehbetätigung der Durchfluss durch die Ventileinheit veränderbar ist. Insbesondere bei einer hülsenförmigen Ausbildung der Dichtelemente kann die Kopplungseinrichtung die Drehbewegung der Drehbetätigung unmittelbar in eine Drehbewegung des zweiten Dichtelements überführen. Im Falle einer scheibenförmigen Ausbildung der Dichtelemente kann die Kopplungseinrichtung auch eine Art Getriebe, beispielsweise eine Gewindeverbindung aufweisen, mit der die Drehbewegung der Drehbetätigung in eine lineare Bewegung des zweiten Dichtelements (relativ zu dem ersten Dichtelement) übersetzt wird. Es kann dabei vorgesehen sein, dass das Verbindungselement Bestandteil der Kopplungseinrichtung ist, so dass das Verbindungselement sowohl die durch die Druckbetätigung ausgelöste Hubbewegung als auch die durch die Drehbewegung ausgelöste Durchflusseinstellbewegung/Mischwassertemperaturverstellbewegung auf das zweite Dichtelement überträgt.

Die Erfindung sowie das technische Umfeld werden im Folgenden anhand der Figuren beispielhaft erläutert. Es zeigen schematisch:
- Figur 1:: eine erste Ausführungsform einer Ventileinheit in Perspektivansicht in einer Durchflussstellung,
- Figur 2:: eine Schnittdarstellung durch die Ausführungsform gemäß Figur 1,
- Figur 3:: eine Schnittdarstellung durch die Ausführungsform gemäß Figur 1 in der Sperrstellung,
- Figur 4:: eine zweite Ausführungsform einer Ventileinheit in Perspektivdarstellung in der Durchflussstellung,
- Figur 5:: eine Schnittdarstellung durch die Ventileinheit gemäß Figur 4,
- Figur 6:: eine Schnittdarstellung durch die Ausführungsform gemäß Figur 4 in der Sperrstellung,
- Figur 7:: eine dritte Ausführungsform einer Ventileinheit im Längsschnitt in einer ersten Durchflussstellung,
- Figur 8:: ein Querschnitt durch die Ventileinheit gemäß Figur 7 und
- Figur 9:: der Querschnitt gemäß Figur 8 durch die Ventileinheit in einer zweiten Durchflussstellung.

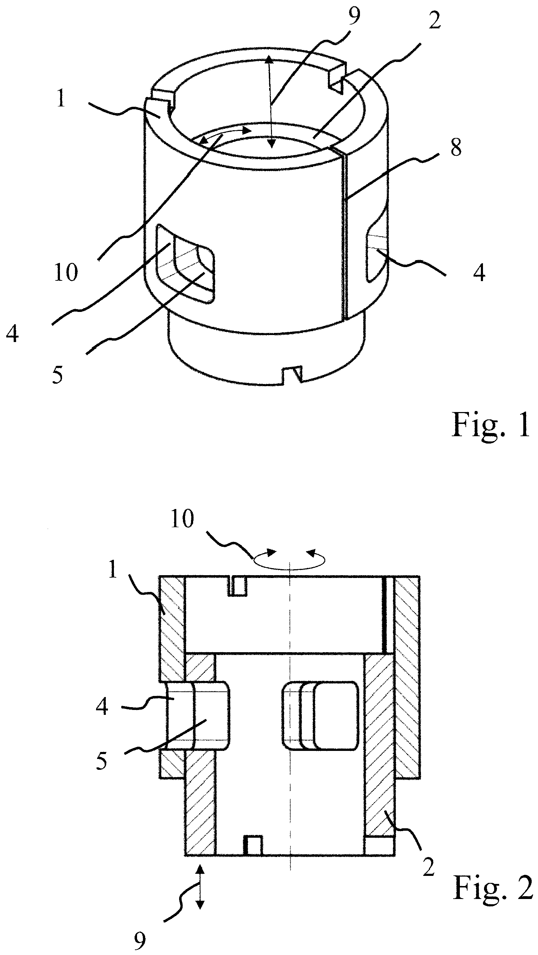

Die in den Figuren 1 bis 3 dargestellte Ventileinheit umfasst ein hülsenförmiges erstes Dichtelement 1 mit ersten Durchflussöffnungen 4 und ein hülsenförmiges zweites Dichtelement 2 mit zweiten Durchflussöffnungen 5. Das koaxial außen zu dem zweiten Dichtelement 2 angeordnete erste Dichtelement 1 weist einen Schlitz 8 auf. Da der Innendurchmesser des hülsenförmigen ersten Dichtelements 1 vor der Montage geringfügig kleiner ist als der Außendurchmesser des zweiten Dichtelements 2, wird die radial innere Oberfläche des ersten Dichtelements 1 auf die radial äußere Oberfläche des Dichtelements 2 gedrückt.

In der in den Figuren 1 und 2 dargestellten Durchflussstellung überlappen die ersten Durchflussöffnungen 4 mit den zweiten Durchflussöffnungen 5, so dass Wasser die Dichtelemente 1, 2 von innen nach außen oder umgekehrt durchfließen könnte.

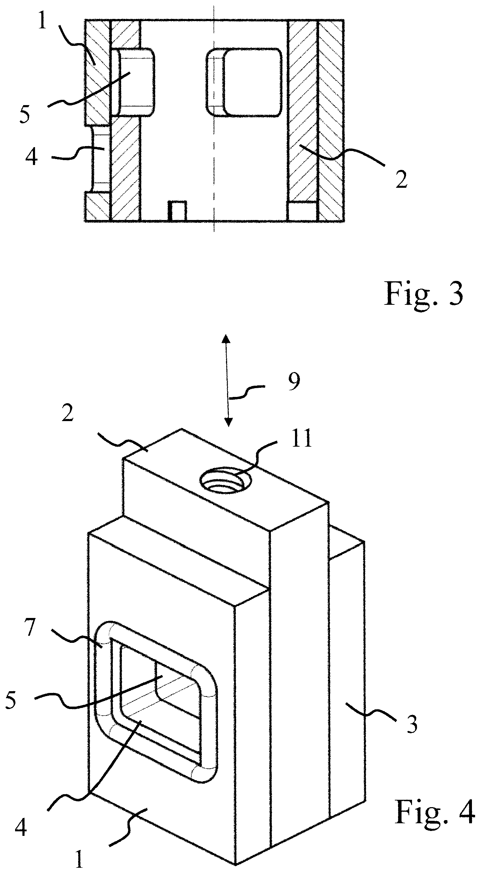

Um den Wasserdurchfluss zu verhindern, kann das zweite Dichtelement 2 durch eine Hubbewegung 9 in axialer Richtung soweit bewegt werden, dass die ersten Durchflussöffnungen 4 und die zweiten Durchflussöffnungen 5 nicht mehr überlappen. Die so erreichbare Sperrstellung ist in Figur 3 dargestellt.

Um den Durchfluss durch die Ventileinheit zu verändern, ist es zudem möglich, das zweite Dichtelement 2 aus der in den Figuren 1 und 2 dargestellten Stellung durch eine Drehbewegung 10 relativ zu dem ersten Dichtelement 1 zu bewegen, wodurch der Grad der Überlappung der ersten Durchflussöffnungen 4 mit den zweiten Durchflussöffnungen 5 verändert wird.

Die in den Figuren 4 bis 6 dargestellte Ventileinheit umfasst ein scheibenförmiges erstes Dichtelement 1 mit einer ersten Durchflussöffnung 4, ein scheibenförmiges zweites Dichtelement 2 mit einer zweiten Durchflussöffnung 5 und ein scheibenförmiges drittes Dichtelement 3 mit einer dritten Durchflussöffnung 6. Die Ventileinheit umfasst zudem eine Art O-Ringe 7 als Druckerzeugungselemente, welche an einem nicht dargestellten Gehäuse abgestützt sind und somit die Dichtelemente aufeinanderdrücken.

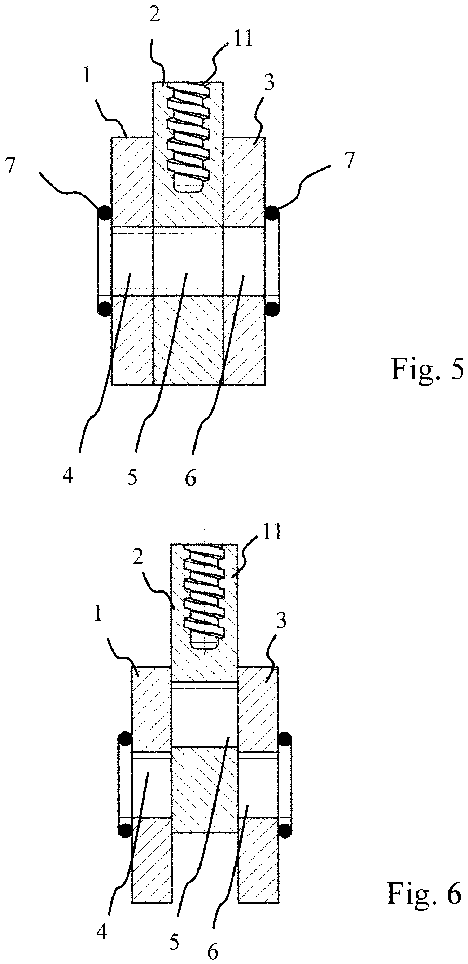

In der in den Figuren 4 und 5 dargestellten Durchflussstellung überlappen die Durchflussöffnungen 4, 5 und 6, so dass Wasser durch die Durchflussöffnungen 4, 5, 6 fließen kann.

Es ist nun möglich, das zweite Dichtelement 2 durch eine Hubbewegung 9 relativ zu dem ortsfesten ersten Dichtelement 1 und dem dritten Dichtelement 3 zu bewegen, wodurch der Grad der Überlappung der zweiten Durchflussöffnung 5 mit der ersten Durchflussöffnung 4 und der dritten Durchflussöffnung 6 veränderbar ist. Ist die Hubbewegung größer als die Höhe der Durchflussöffnungen 4, 5, 6, so befindet sich die Ventileinheit in der in Figur 6 dargestellten Sperrstellung, in der ein Durchfluss durch die Ventileinheit verhindert ist. Zur linearen Bewegung des zweiten Dichtelements 2 kann beispielsweise eine an einem nicht dargestellten Gehäuse abgestützte Schraube in die im zweiten Dichtelement 2 ausgebildete Gewindebohrung 11 eingreifen.

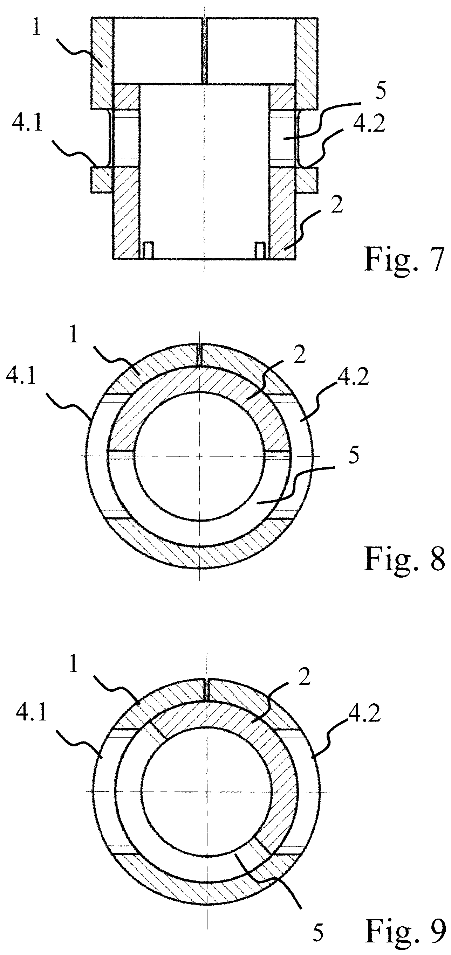

Bei der in den Figuren 7 bis 9 dargestellten Ausführungsform weist das erste Dichtelement 1 eine einem Kaltwassereinlass zugeordnete erste Durchflussöffnung 4.1 und eine weitere, einem Heißwasseranschluss zugeordnete erste Durchflussöffnung 4.2 auf. Das zweite Dichtelement 2 weist hingegen genau eine zweite Durchflussöffnung 5 auf.

Bei der in den Figuren 7 und 8 dargestellten ersten Durchflussstellung fließt Kaltwasser und Heißwasser mit der gleichen Rate durch die entsprechenden ersten Durchflussöffnungen 4.1 und 4.2. Um nun die Temperatur des so entstehenden Mischwassers zu ändern, kann das zweite Dichtelement 2 relativ zu dem ersten Dichtelement 1 verdreht werden, so dass sich die Menge des gemischten Heiß- und Kaltwassers ändert. In Figur 9 ist eine entsprechende zweite Durchflussstellung gezeigt, in der die erste Durchflussöffnung 4.2 für das Heißwasser vollständig von dem zweiten Dichtelement 2 versperrt ist und in der die erste Durchflussöffnung 4.1 für das Kaltwasser vollständig geöffnet ist, so dass das Kaltwasser aus dem nicht dargestellten Wasserauslass austreten kann. Wie mit Bezug zu der Ausführungsform der Figuren 1 bis 3 erläutert, kann auch die Ventileinheit gemäß den Figuren 7 bis 9 in eine Sperrstellung überführt werden, in der kein Wasser durch die Ventileinheit fließt.

### Bezugszeichenliste

- 1: erstes Dichtelement
- 2: zweites Dichtelement
- 3: drittes Dichtelement
- 4, 4.1, 4.2: erste Durchflussöffnung
- 5: zweite Durchflussöffnung
- 6: dritte Durchflussöffnung
- 7: O-Ring
- 8: Schlitz
- 9: Hubbewegung
- 10: Drehbewegung
- 11: Gewindebohrung

## Patentansprüche

1. Sanitärventil mit
- mindestens einem Wassereinlass,
- einem Wasserauslass und
- einer Ventileinheit, welche zwischen dem mindestens einen Wassereinlass und dem Wasserauslass angeordnet ist und aus mindestens einer ersten Stellung in mindestens eine zweite Stellung überführbar ist,
**dadurch gekennzeichnet, dass**
die Ventileinheit mindestens ein erstes Dichtelement (1) und ein zweites Dichtelement (2) aufweist, wobei
- das erste Dichtelement (1) und das zweite Dichtelement (2) aus Keramik gebildet sind,
- das erste Dichtelement (1) mindestens eine erste Durchflussöffnung (4) aufweist,
- das zweite Dichtelement (2) mindestens eine zweite Durchflussöffnung (5) aufweist und
- das erste Dichtelement (1) und das zweite Dichtelement (2) zwischen der ersten Stellung und der zweiten Stellung relativ zueinander bewegbar sind, wobei die erste Stellung eine Durchflussstellung ist, in der mindestens eine erste Durchflussöffnung (4) und mindestens eine zweite Durchflussöffnung (5) einander zumindest teilweise überlappen und so einen Durchfluss von mindestens einem Wassereinlass zu dem Wasserauslass ermöglichen.

2. Sanitärventil nach Anspruch 1, wobei eine zweite Stellung eine Sperrstellung ist, in der die mindestens eine erste Durchflussöffnung (4) und die mindestens eine zweite Durchflussöffnung (5) einander nicht überlappen.

3. Sanitärventil nach Anspruch 1 oder 2, wobei das Sanitärventil einen Heißwassereinlass und einen Kaltwassereinlass als Wassereinlässe aufweist und wobei das erste Dichtelement (1) wenigstens eine dem Kaltwassereinlass zugeordnete erste Durchflussöffnung (4.1) und wenigstens eine weitere, dem Heißwasseranschluss zugeordnete erste Durchflussöffnung (4.2) aufweist, wobei durch Relativbewegung des zweiten Dichtelements (2) zu dem ersten Dichtelement (1) die Ventileinheit von einer ersten Durchflussstellung als eine erste Stellung in eine zweite Durchflussstellung als eine zweite Stellung bringbar ist, wobei sich die Wassertemperatur des am Wasserauslass ausfließenden Wassers in der ersten Durchflussstellung und von der Wassertemperatur des am Wasserauslass ausfließenden Wassers in der zweiten Durchflussstellung unterscheidet.

4. Sanitärventil nach einem der Ansprüche 1 bis 3, wobei die Dichtelemente (1, 2, 3) hülsenförmig ausgebildet sind.

5. Sanitärventil nach einem der Ansprüche 1 bis 3, wobei die Dichtelemente (1, 2, 3) scheibenförmig ausgebildet sind.

6. Sanitärventil nach einem der vorhergehenden Ansprüche, wobei ein drittes Dichtelement (3) mit mindestens einer dritten Durchflussöffnung (6) vorgesehen ist, wobei das zweite Dichtelement (2) zwischen dem ersten Dichtelement (1) und dem dritten Dichtelement (3) angeordnet ist und relativ zu dem ersten Dichtelement (1) und dem dritten Dichtelement (3) beweglich ist.

7. Sanitärventil nach einem der vorhergehenden Ansprüche, wobei mindestens ein Druckerzeugungsmittel (7, 8) ausgebildet ist, durch welches einander zugewandte Oberflächen des ersten Dichtelements (1) und des zweiten Dichtelements (2) aufeinandergedrückt werden.

8. Sanitärventil nach einem der vorhergehenden Ansprüche, wobei die Relativbewegung des ersten Dichtelements (1) zu dem zweiten Dichtelement (2) zwischen einer Durchflussstellung und einer Sperrstellung mittels einer Hubbewegung (9) in der Ebene oder parallel zu der Ebene der Durchflussöffnungen (4, 5, 6) erfolgt.

9. Sanitärventil nach einem der vorhergehenden Ansprüche, wobei zur Verstellung des Durchflusses oder zur Verstellung der Wassertemperatur des am Wasserauslass ausfließenden Wassers das erste Dichtelement (1) und das zweite Dichtelement (2) stufenlos zueinander bewegbar sind, insbesondere in Richtung oder quer zu der Richtung der Hubbewegung (9).

10. Sanitärventil nach einem der vorhergehenden Ansprüche, wobei das Sanitärventil eine Betätigungseinrichtung umfasst, die durch eine Druckbetätigung die Ventileinheit zwischen einer Sperrstellung und einer Durchflussstellung umschaltet und mit der durch eine Drehbetätigung der Durchfluss durch die Ventileinheit oder die Wassertemperatur des am Wasserauslass ausfließenden Wassers veränderbar ist.

11. Sanitärventil nach Anspruch 10, wobei ein Verbindungselement der Betätigungseinrichtung mit dem zweiten Dichtelement (2) axial unbeweglich verbunden ist und wobei die Betätigungseinrichtung eine Kulissengestaltung aufweist, die das Verbindungselement in einer ersten stabilen axialen Position hält und die dafür vorgesehen ist, das Verbindungselement während der Druckbetätigung in eine zweite stabile axiale Position zu überführen, die sich von der ersten stabilen axialen Position unterscheidet.

12. Sanitärventil nach Anspruch 10 oder 11, wobei die Betätigungseinrichtung über eine Kopplungseinrichtung so mit dem zweiten Dichtelement (2) gekoppelt ist, dass durch eine Drehbetätigung der Durchfluss durch die Ventileinheit oder die Wassertemperatur des am Wasserauslass ausfließenden Wassers veränderbar ist.
